# EUROPÄISCHE PATENTANMELDUNG

(11) **EP 3 656 726 A1**
(43) Veröffentlichungstag der Anmeldung: **27.05.2020**
(21) Anmeldenummer: 19208617.1
(22) Anmeldetag: 12.11.2019
(51) Int. Cl.: B66F 9/06, B66F 9/075

(54) **TRANSPORTROBOTER, ANORDNUNG UND VERFAHREN ZUR HERSTELLUNG EINES TRANSPORTROBOTERS**

(30) Priorität: 12.11.2018 DE 102018219287
(71) Anmelder: Evocortex GmbH, 90489 Nürnberg (DE)
(72) Erfinder: Bauer, Hubert, 74541 Vellberg-Großaltdorf (DE)
(74) Vertreter: Patentanwälte Magenbauer & Kollegen Partnerschaft mbB

(57) **Zusammenfassung**

Die Erfindung betrifft einen Transportroboter (10) mit einem quaderförmigen Roboterkörper (1), dessen Oberseite (21) eine x-y-Ebene definiert, die als Ladefläche für Transportgüter und/oder zum Tragen eines Instruments dient, und einer Antriebseinrichtung (9), die eine Mehrzahl von am Roboterkörper (1) angeordneten Rädern (2) umfasst und ausgebildet ist, durch Drehantrieb der Räder (2) den Transportroboter (10) in einer x-y-Fahrebene zu verfahren, wobei der Roboterkörper (1) über eine Tragestruktur (3) verfügt, die in γ-Richtung verlaufende Stirnteile (5) und in x-Richtung verlaufende Seitenteile (6) umfasst, wobei die γ-Erstreckung der Stirnteile (5) die γ-Erstreckung der Oberseite (21) bestimmt und die x-Eistieckung der Seitenteile (6) die x-Erstreckung der Oberseite (21) bestimmt, dadurch gekennzeichnet, dass die Stirnteile (5) Stirnbleche sind und/oder die Seitenteile (6) Strangpressprofile sind.

## Beschreibung

Die Erfindung betrifft einen Transportroboter mit einem quaderförmigen Roboterkörper, dessen Oberseite eine x-y-Ebene definiert, die als Ladefläche für Transportgüter und/oder zum Tragen eines Instruments dient, und einer Antriebseinrichtung, die eine Mehrzahl von am Roboterkörper angeordneten Rädern umfasst und ausgebildet ist, durch Drehantrieb der Räder den Transportroboter in einer x-y-Fahrebene zu verfahren, wobei der Roboterkörper über eine Tragestruktur verfügt, die in y-Richtung verlaufende Stirnteile und in x-Richtung verlaufende Seitenteile umfasst, wobei die y-Erstreckung der Stirnteile die y-Erstreckung der Oberseite bestimmt und die x-Erstreckung der Seitenteile die x-Erstreckung der Oberseite bestimmt.

Ein solcher Transportroboter wird beispielsweise zur Beförderung von Transportgütern, beispielsweise Werkstücken, Bauteilen, Paletten und/oder fertigen Produkten verwendet. Die Transportgüter werden auf der Ladefläche transportiert. Die Ladefläche muss nicht zwingend eine geschlossene Fläche sein.

Zweckmäßigerweise kann ein solcher Transportroboter in der industriellen Fertigung, beispielsweise einer Produktionslinie, eingesetzt werden, um ein Werkstück oder Bauteil von einer Bearbeitungsstation zur nächsten Bearbeitungsstation zu transportieren. Der Transportroboter ist insbesondere ausgebildet, ein vorgegebenes Ziel autonom anzufahren.

Bei bestimmten Anwendungen kann es erforderlich sein, dass die Oberseite - also insbesondere die Ladefläche - des Transportroboters eine individuelle Größe aufweist.

Eine Aufgabe der Erfindung besteht darin, einen Transportroboter bereitzustellen, der in einfacher Weise in individueller Größe herstellbar ist.

Die Aufgabe wird gelöst durch einen Transportroboter gemäß Anspruch 1. Bei dem Transportroboter sind die Stirnteile Stirnbleche, insbesondere gelaserte Stirnbleche. Alternativ oder zusätzlich dazu sind die Seitenteile Strangpressprofile.

Bei dem Transportroboter wird die Größe der Oberseite durch die Größe der Seitenteile und der Stirnteile bestimmt. Dadurch, dass die Stirnteile Stirnbleche, insbesondere gelaserte Stirnbleche, und die Seitenteile Strangpressprofile sind, können die Seitenteile und Stirnteile auf sehr einfache Art und Weise in individuellen Größen bereitgestellt werden. Folglich lässt sich der Transportroboter auf einfache Weise in individueller Größe herstellen.

Vorteilhafte Weiterbildungen sind Gegenstand der Unteransprüche.

Vorzugsweise umfasst die Tragestruktur eine Rahmenstruktur, die durch die Stirnteile und die Seitenteile gebildet wird. Die Stirnteile und die Seitenteile sind zweckmäßigerweise aneinander befestigt.

Vorzugsweise umfasst die Tragestruktur in x-Richtung verlaufende innere Seitenteile, die einen inneren Bereich der Tragestruktur in mehrere Kammern unterteilen. In den Kammern sind zweckmäßigerweise verschiedene Funktionseinheiten des Transportroboters angeordnet.

Vorzugsweise ist die Antriebseinrichtung ausgebildet, durch Verschwenken der Räder um eine horizontale Schwenkachse einen Hub der Oberseite in z-Richtung und/oder eine Neigung der Oberseite um eine x-Achse und/oder eine Neigung der Oberseite um eine y-Achse zu bewirken. Ein Hub und/oder eine Neigung der Oberseite kann insbesondere dazu dienen, ein Entladen oder Beladen des Transportroboters zu vereinfachen. Sofern der Transportroboter zum Tragen eines Instruments - also als Instrumententräger verwendet wird, kann der Hub und/oder die Neigung zur Ausrichtung des Instruments dienen.

Vorzugsweise umfasst die Antriebseinrichtung eine Fahrantriebseinrichtung zum Drehantrieb der Räder und eine Hubantriebseinrichtung zum Verschwenken der Räder um die horizontale Schwenkachse. Gemäß dieser Ausgestaltung ist die Hubantriebseinrichtung zusätzlich zur Fahrantriebseinrichtung vorhanden. Die Hubantriebsvorrichtung umfasst insbesondere eine Hubantriebseinheit mit einem Linearantrieb.

Vorzugsweise ist die Antriebseinrichtung ausgebildet, durch gegenläufigen Drehantrieb der Räder ein Verschwenken der Räder um die horizontale Schwenkachse und damit einen Hub der Oberseite zu bewirken. Gemäß dieser Ausgestaltung wird die Fahrantriebseinrichtung nicht nur zum Drehantrieb der Räder, sondern zusätzlich dazu auch zur Verschwenkung der Räder verwendet. Auf die vorstehend erwähnte Hubantriebseinrichtung kann verzichtet werden.

Vorzugsweise umfasst die Antriebseinrichtung eine Mehrzahl an separaten Antriebseinheiten, wobei jede Antriebseinheit einem Rad zugeordnet ist und eine Fahrantriebseinheit zum Drehantrieb des Rads und/oder eine Hubantriebseinheit zum Verschwenken des Rads um eine horizontale Achse umfasst. Zweckmäßigerweise können die separaten Antriebseinheiten in individuellen Abständen zueinander positioniert werden. Vorzugsweise können bei Transportrobotern unterschiedlicher Größe baugleiche Antriebseinheiten eingesetzt werden, wobei der jeweiligen Größe des Transportroboters durch die Beabstandung der Antriebseinheiten zueinander Rechnung getragen werden kann.

Vorzugsweise umfassen die Räder omnidirektionale Räder, insbesondere Mecanum-Räder. Zweckmäßigerweise sind die Räder nicht um eine vertikale Achse drehbar.

Vorzugsweise umfasst die Antriebseinrichtung eine Steuereinrichtung, die eine GPS-Einheit, inertiale Messeinheit, Laser-Einheit, LIDAR-Einheit und/oder optische Lokalisationseinheit aufweist. Zweckmäßigerweise ist die Steuereinrichtung ausgebildet, den Transportroboter autonom zu einem vorgegebenen Ziel zu navigieren.

Vorzugsweise ist die Antriebseinrichtung ausgebildet, zur Bereitstellung des Hubs der Oberseite die Räder nach Innen in Richtung hin zu der Mitte des Roboterkörpers zu verschwenken.

Vorzugsweise umfasst die Antriebseinrichtung zwei vordere Antriebseinheiten und zwei hintere Antriebseinheiten. Der Abstand zwischen den zwei vorderen Antriebseinheiten ist zweckmäßigerweise geringer als der Abstand zwischen den zwei hinteren Antriebseinheiten.

Vorzugsweise ist jede Antriebseinheit um eine jeweilige horizontale Schwenkachse verschwenkbar, um einen Hub der Oberseite in z-Richtung zu bewirken. Die horizontalen Schwenkachsen sind vorzugsweise in vertikaler Richtung jeweils tiefer als eine Antriebsachse der jeweiligen Fahrantriebseinheit und höher als eine Radachse des jeweiligen Rads angeordnet.

Ferner wird ein Verfahren zur Herstellung eines vorstehend beschriebenen Transportroboters bereitgestellt. Das Verfahren umfasst die Schritte: Bereitstellung von individuellen Maßen für die x-Erstreckung und y-Erstreckung des Transportroboters, Bereitstellen der Antriebseinrichtung, nach dem Bereitstellen der Antriebseinrichtung, Herstellen des Roboterkörpers gemäß den bereitgestellten Maßen, wobei die Stirnteile gemäß dem Maß für die y-Erstreckung hergestellt, insbesondere gelasert, werden und die Seitenteile gemäß dem Maß für die x-Erstreckung hergestellt, insbesondere zugesägt werden, und Montieren der Antriebseinrichtung an dem Roboterkörper.

Folglich wird zuerst die Antriebseinrichtung bereitgestellt und erst danach wird der Roboterkörper gemäß den individuellen Maßen hergestellt. Die Antriebseinrichtung ist zweckmäßigerweise unabhängig von der Größe des Transportroboters, so dass für Transportroboter verschiedener Baugröße baugleiche Antriebseinrichtungen eingesetzt werden können. Dadurch, dass zuerst die Baugrößen-unabhängige Komponente - nämlich die Antriebseinrichtung - und erst dann die Baugrößen-abhängige Komponente - nämlich der Roboterkörper - bereitgestellt werden, kann die Herstellung schneller und effizienter erfolgen. Insbesondere ist es möglich, die Antriebseinrichtung bereits im Voraus bereitzustellen. Sobald die individuellen Maße bekannt sind, kann dann der Roboterkörper hergestellt werden und mit der bereits vorhandenen Antriebseinrichtung zu dem Transportroboter zusammengesetzt werden.

Ferner wird eine Anordnung bereitgestellt, umfassend einen ersten Transportroboter und einen zweiten Transportroboter, die jeweils in vorstehend beschriebener Weise ausgebildet sind, wobei sich die beiden Transportroboter in der x-Erstreckung der Seitenteile und/oder der y-Erstreckung der Stirnteile unterscheiden und jeweils eine baugleiche Antriebseinrichtung aufweisen. Folglich wird für Transportroboter unterschiedlicher Größe die gleiche Antriebseinrichtung verwendet. Dies kann die Herstellung der Transportroboter erleichtern.

Unter Bezugnahme auf die Figuren werden nachstehend exemplarische Ausführungsformen erläutert. Dabei zeigt
- Figur 1: eine perspektivische Ansicht eines Transportroboters,
- Figur 2: eine perspektivische Ansicht einer Tragestruktur,
- Figur 3: eine perspektivische Ansicht einer Antriebseinrichtung,
- Figur 4: eine perspektivische Ansicht von Stirnteilen,
- Figur 5: eine perspektivische Ansicht von Seitenteilen,
- Figur 6: eine perspektivische Ansicht eines Zentral-Abdeckteils,
- Figur 7: eine perspektivische Ansicht von Seiten-Abdeckteilen,
- Figur 8: eine perspektivische Ansicht von Eck-Abdeckteilen,
- Figur 9: eine perspektivische Ansicht von Boden-Abdeckteilen,
- Figur 10: ein Flussdiagramm eines Verfahrens zur Herstellung eines Transportroboters,
- Figur 11: eine schematische Darstellung einer Anordnung aus zwei Transportrobotern,
- Figur 12: eine schematische Seitenansicht eines weiteren Transportroboters,
- Figur 13: eine schematische Draufsicht auf den weiteren Transportroboter
- Figur 14: eine Anordnung aus dem weiteren Transportroboter, einem Rollbrett und einer Mehrzahl an Transportkisten,
- Figur 15: eine Anordnung aus vier Transportrobotern und einer Transportpalette und
- Figur 16: eine Anordnung aus zwei Transportrobotern und einer halben Transportpalette.

Bei der nachstehenden Erläuterung wird auf die x-Richtung, y-Richtung und z-Richtung Bezug genommen. Diese Richtungen sind, wie in den Figuren gezeigt, orthogonal zueinander ausgerichtet. Die x-Richtung kann auch als Längsrichtung, die y-Richtung als Querrichtung und die z-Richtung als Höhenrichtung bezeichnet werden.

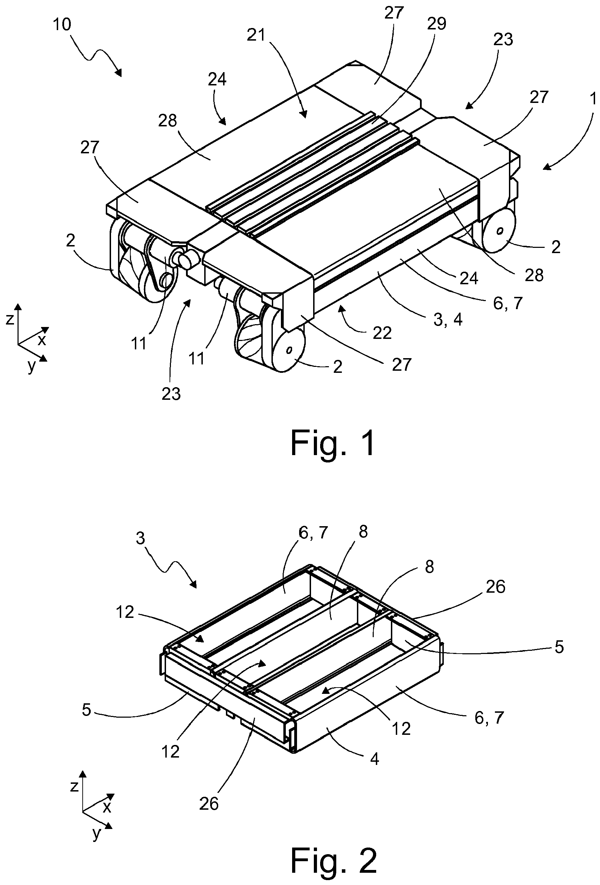

Die Figur 1 zeigt einen Transportroboter 10 mit einem quaderförmigen Roboterkörper 1. Die Oberseite 21 des Roboterkörpers 1 definiert eine x-y-Ebene, die als Ladefläche für Transportgüter und/oder zum Tragen eines Instruments dient. Die Ladefläche kann, wie gezeigt, geschlossen sein oder, alternativ dazu, eine oder mehrere Öffnungen oder Durchbrechungen aufweisen.

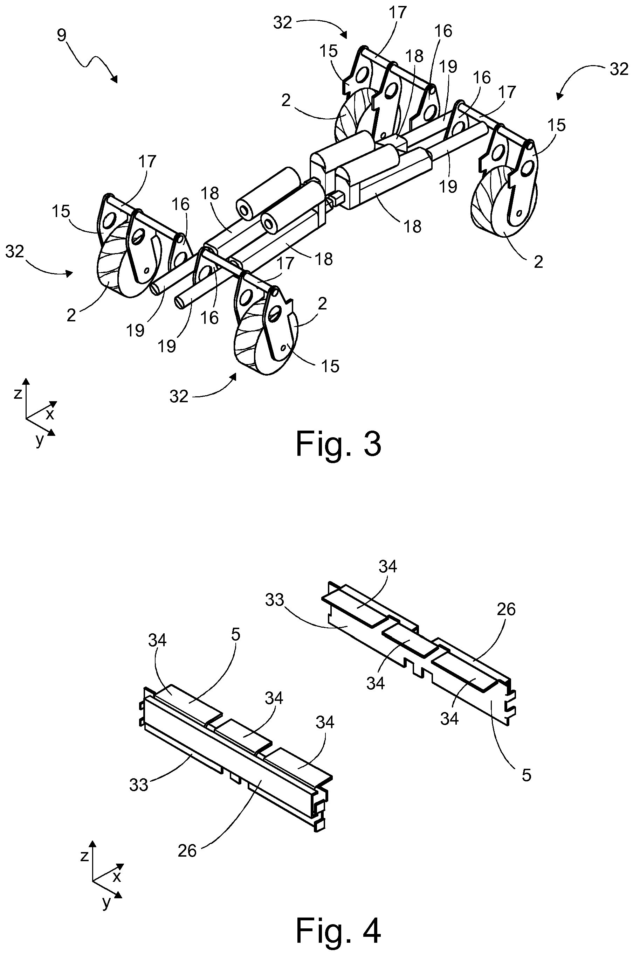

Der Transportroboter 10 umfasst eine (in der Figur 3 gezeigte) Antriebseinrichtung 9, die eine Mehrzahl von am Roboterkörper 1 angeordneten Rädern 2 umfasst. Die Antriebseinrichtung ist ausgebildet, durch Drehantrieb der Räder 2 den Transportroboter 10 in einer x-y-Fahrebene zu verfahren.

Der Roboterkörper 1 verfügt über eine Tragestruktur 3, die in y-Richtung verlaufende Stirnteile 5 und in x-Richtung verlaufende Seitenteile 6 umfasst. Die y-Erstreckung der Stirnteile 5 bestimmt die y-Erstreckung der Oberseite 21. Die x-Erstreckung der Seitenteile 6 bestimmt die x-Erstreckung der Oberseite 21. Die Stirnteile 5 sind Stirnbleche, insbesondere gelaserte Stirnbleche. Die Seitenteile 6 sind Strangpressprofile.

Im Folgenden soll näher auf den Grundaufbau des Transportroboters 1 eingegangen werden.

Der Transportroboter 1 dient insbesondere als mobiler Werkstückträger. Der Transportroboter 1 umfasst den quaderförmigen Roboterkörper 1, der exemplarisch eine flache Grundgestalt hat. Die x-Erstreckung und y-Erstreckung des Roboterkörpers 1 sind jeweils größer als die z-Erstreckung des Roboterkörpers 1. Der Roboterkörper 1 kann auch als Robotergehäuse bezeichnet werden.

Die x-Erstreckung des Transportroboters 1, insbesondere der Oberseite 21, liegt vorzugsweise zwischen 600mm und 1200mm. Die y-Erstreckung des Transportroboters 1, insbesondere der Oberseite 21, liegt vorzugsweise zwischen 400mm und 800mm. Die Unterfahrhöhe des Transportroboters 1 ist kleiner als 140mm, insbesondere kleiner als 100mm. Die Nutzlast des Transportroboters beträgt vorzugsweise 120 kg.

Der Roboterkörper 1 verfügt über die normal zur z-Richtung ausgerichtete Oberseite 21 und Unterseite 22, zwei normal zur x-Richtung ausgerichtete Stirnseiten 23 und zwei normal zur y-Richtung ausgerichtete Längsseiten 24.

An den Stirnseiten 23 sind die Räder 2 angeordnet. An den Längsseiten 24 und/oder der Unterseite 22 sind zweckmäßigerweise keine Räder vorhanden. Exemplarisch sind vier Räder 2 vorgesehen. An jeder Stirnseite 23 befinden sich jeweils zwei Räder 2. Die Räder 2 einer Stirnseite 23 sind zueinander beabstandet angeordnet. Zweckmäßigerweise ist jedes Rad 2 in einem jeweiligen Eckbereich des quaderförmigen Roboterkörpers 1 angeordnet.

Die Räder 2, insbesondere sämtliche Räder 2, sind vorzugsweise omnidirektionale Räder 2. Der Transportroboter 1 kann durch Drehantrieb der Räder 2 in jede beliebige x-y-Fahrtrichtung bewegt werden und um jede beliebige z-Drehachse rotiert werden. Bei den Rädern 2 handelt es sich exemplarisch um Mecanum-Räder.

Der Roboterkörper 1 setzt sich zusammen aus der Tragestruktur 3 und den nachstehend noch erläuterten Abdeckteilen 27, 28, 29, 31.

Zunächst soll unter Bezugnahme auf die Figur 2 näher auf die Tragestruktur 3 eingegangen werden:
Die Tragestruktur 3 umfasst die Stirnteile 5 und die Seitenteile 6. Bei den Stirnteilen 5 und den Seitenteilen 6 handelt es sich jeweils um längliche Elemente. Die Stirnteile 5 sind mit ihrer Längsachse parallel zur y-Richtung ausgerichtet und die Seitenteile 6 sind mit ihrer Längsachse parallel zur x-Richtung ausgerichtet.

Die Stirnteile 5 und die Seitenteile 6 sind aneinander befestigt und bilden zusammen eine rechteckige, rahmenförmige Struktur, die auch als Rahmenstruktur 4 bezeichnet werden soll.

Die Seitenteile 6 können auch als äußere Seitenteile 7 bezeichnet werden. Optional umfasst die Tragestruktur 3 zusätzlich zu den äußeren Seitenteilen 7 innere Seitenteile 8. Die inneren Seitenteile 8 verlaufen in x-Richtung - also parallel zu den äußeren Seitenteilen 7 - und sind zwischen den beiden äußeren Seitenteilen 7 angeordnet. Die inneren Seitenteile 8 verlaufen von einem Stirnteil 5 zu dem anderen Stirnteil 5. Exemplarisch sind zwei innere Seitenteile 8 vorhanden.

Die inneren Seitenteile 8 unterteilen den inneren Bereich der Tragestruktur 3 - also insbesondere den durch die Rahmenstruktur 4 definierten inneren Bereich - in mehrere Kammern 12. Exemplarisch ist der innere Bereich in drei Kammern 12 unterteilt - eine mittlere Kammer 12 und zwei seitliche Kammern 12. In den Kammern 12 sind insbesondere ein (in den Figuren nicht gezeigter) Akku, die nachstehend noch erläuterte (in den Figuren nicht gezeigte) Steuereinrichtung und/oder die nachstehend noch erläuterte Hubantriebseinrichtung angeordnet. In einer ersten seitlichen Kammer 12 ist beispielsweise der Akku angeordnet, in einer zweiten seitlichen Kammer 12 die Steuereinrichtung und in der mittleren Kammer 12 die Hubantriebseinrichtung.

Nachstehend soll unter Bezugnahme auf die Figur 4 näher auf die Stirnteile 5 eingegangen werden.

Exemplarisch umfasst der Transportroboter 10 zwei Stirnteile 5. Die Stirnteile 5 sind parallel zueinander angeordnet. Die Stirnteile 5 liegen in einer gemeinsamen x-y-Ebene. Die Stirnteile 5 können identisch und/oder zueinander spiegelsymmetrisch in Bezug auf eine y-z-Ebene ausgebildet sein. Die Stirnteile 5 nehmen wenigstens 90% der y-Erstreckung des Transportroboters 10, insbesondere des Roboterkörpers 1, ein.

Bei den Stirnteilen 5 handelt es sich um Stirnbleche. Insbesondere handelt es sich bei den Stirnteilen 5 um gelaserte, gekantete und/oder gestanzte Stirnbleche 5. Die Stirnbleche 5 sind insbesondere Stanzbiegeteile. Die Stirnbleche 5 weise exemplarisch ein L-förmiges Profil auf. Jedes Stirnteil 5 umfasst einen rechteckigen Hauptabschnitt 33, der mit seiner flächenmäßig größten Seite normal zur x-Richtung ausgerichtet ist. Jedes Stirnteil 5 umfasst ferner mehrere - hier exemplarisch drei - Horizontalabschnitte 34, die sich an die obere Kante des Hauptabschnitts 33 anschließen. Die Horizontalabschnitte 34 sind mit ihrer flächenmäßig größten Seite normal zur z-Richtung ausgerichtet. Bei den Horizontalabschnitten 34 handelt es sich insbesondere um nach innen gebogene Abschnitte der als Stirnbleche ausgeführten Stirnteile 5. An dem Hauptabschnitt 33 und/oder den Horizontalabschnitten 34 sind zweckmäßigerweise (in den Figuren nicht gezeigte) Befestigungslöcher vorhanden.

Außen an den Stirnteilen 5 - also an den Stirnseiten der Tragestruktur 3 - ist jeweils ein Radaufhängungs-Befestigungsteil 26 angeordnet, dass insbesondere zur Befestigung der nachstehend noch erläuterten Radaufhängungen dient. Das Radaufhängungs-Befestigungsteil 26 ist ein länglich ausgebildet und mit seiner Längsachse parallel zur y-Richtung ausgerichtet. Exemplarisch ist das Radaufhängungs-Befestigungsteil 26 ein Blechteil, insbesondere ein gelasertes, gekantetes und/oder gestanztes Blechteil. Das Radaufhängungs-Befestigungsteil 26 ist zweckmäßigerweise ein Stanzbiegeteil. Das Radaufhängungs-Befestigungsteil 26 hat ein im Wesentlichen U-förmiges Profil und liegt mit seiner offenen Seite an dem Hauptabschnitt 33 des Stirnteils 5 an. An dem Radaufhängungs-Befestigungsteil 26 sind zweckmäßigerweise (in den Figuren nicht gezeigte) Befestigungslöcher vorhanden.

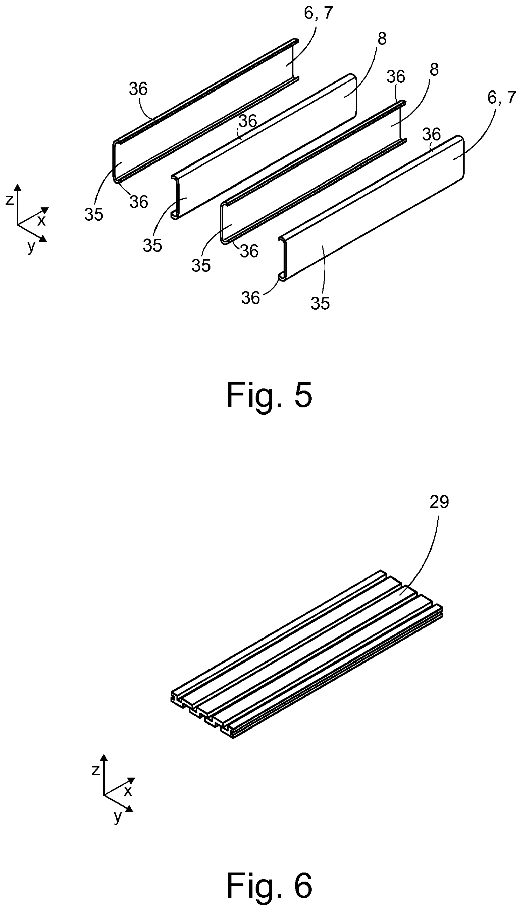

Nachstehend soll unter Bezugnahme auf die Figur 5 näher auf die Seitenteile 6 und 8 eingegangen werden.

Exemplarisch umfasst der Transportroboter 10 insgesamt 4 Seitenteile 6 und 8. Alternativ dazu kann der Transportroboter 10 ohne die inneren Seitenteile 8 bereitgestellt werden. In diesem Fall umfasst der Transportroboter 10 nur zwei Seitenteile 6. Die Seitenteile 6, 8 sind parallel zueinander angeordnet. Die Seitenteile 6, 8 liegen in einer gemeinsamen x-y-Ebene. Die Seitenteile 6, 8 können identisch und/oder zueinander spiegelsymmetrisch in Bezug auf eine x-z-Ebene ausgebildet sein. Die Seitenteile 6, 8 nehmen wenigstens 90% der x-Erstreckung des Transportroboters 10, insbesondere des Roboterkörpers 1 ein. Die Seitenteile 6, 8 sind als Strangpressprofile, insbesondere auf ihre jeweilige x-Erstreckung zugesägte Strangpressprofile ausgeführt.

Die Seitenteile 6, 8 haben jeweils eine leistenförmige Grundgestalt und sind mit ihrer flächenmäßig größten Seite normal zur y-Richtung ausgerichtet. Die Seitenteile 6, 8 verfügen exemplarisch jeweils über im Wesentlichen U-förmige oder C-förmige Profile. Zweckmäßigerweise weisen die Seitenteile 6, 8 (in den Figuren nicht gezeigte) Kühlrippen auf. Die Seitenteile 6, 8 umfassen jeweils einen rechteckigen, normal zur y-Richtung ausgerichteten Hauptabschnitt 35 an dessen oberer und unterer Kante sich stegförmige Horizontalabschnitte 36 anschließen, die normal zur z-Richtung ausgerichtet sind.

Die Seitenteile 6 stellen zweckmäßigerweise die Längsseiten 24 bereit. Die Seitenteile 6 bilden insbesondere die längsseitigen Außenflächen des Transportroboters 1.

Nachstehend soll unter Bezugnahme auf die Figuren 6, 7, 8 und 9 näher auf die Abdeckteile 27, 28, 29 und 31 eingegangen werden.

Bei den Abdeckteilen 27, 28, und/oder 31 handelt es sich zweckmäßigerweise um Blechteile, insbesondere gelaserte, gekantete und/oder gestanzte Blechteile. Vorzugsweise handelt es sich um Stanzbiegeteile. Bei dem Abdeckteil 29 handelt es sich vorzugsweise um ein Strangpressprofil, das zweckmäßigerweise auf seine x-Erstreckung zugesägt ist.

Zunächst zu dem in der Figur 6 gezeigten Abdeckteil 29: Dieses Abdeckteil kann auch als Zentral-Abdeckteil 29 bezeichnet werden. Das Zentral-Abdeckteil 29 ist plattenförmig ausgebildet und mit seiner flächenmäßig größten Seite normal zur z-Richtung ausgerichtet. Das Zentral-Abdeckteil 29 ist länglich ausgebildet und mit seiner Längsachse parallel zur x-Achse ausgerichtet. Die x-Erstreckung des Zentral-Abdeckteils 29 beträgt zweckmäßigerweise wenigstens 70% der x-Erstreckung des Transportroboters 1, insbesondere des Roboterkörpers 1. Das Zentral-Abdeckteil 29 weist auf seiner Oberseite eine oder mehrere Nuten auf, insbesondere eine oder mehrere T-Nuten. Die Nut oder Nuten verlaufen in x-Richtung. Das Zentral-Abdeckteil 29 kann auch als T-Nutprofil bezeichnet werden.

Wie in der Figur 1 gezeigt, ist das Zentral-Abdeckteil 29 auf der Oberseite der Tragestruktur 3 angeordnet und zwar in einem zentralen y-Bereich der Tragestruktur 3. Das Zentral-Abdeckteil 29 dient insbesondere dazu, die mittlere Kammer 12 abzudecken.

Das Zentral-Abdeckteil 29 kann auch weggelassen werden. Ferner ist es möglich, dass das Zentral-Abdeckteil 29 nicht als Strangpressprofil sondern stattdessen als Blechteil bereitgestellt wird.

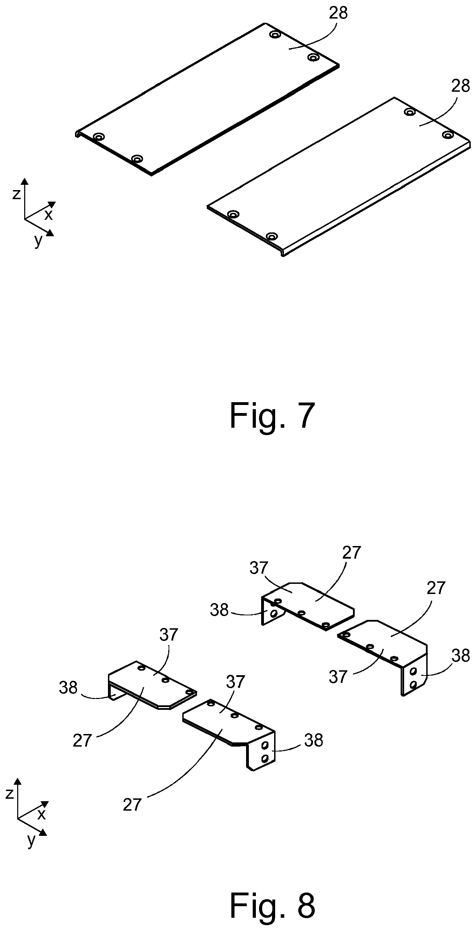

Nun zu den Seiten-Abdeckteilen 27, die in der Figur 7 gezeigt sind: Die Seiten-Abdeckteile 27 sind plattenförmig ausgebildet und mit ihrer flächenmäßig größten Seite normal zur z-Richtung ausgerichtet. Die Seiten-Abdeckteile 27 sind länglich ausgebildet und mit ihrer Längsachse parallel zur x-Achse ausgerichtet. Die x-Erstreckung der Seiten-Abdeckteile 27 beträgt zweckmäßigerweise wenigstens 70% der x-Erstreckung des Transportroboters 1, insbesondere des Roboterkörpers 1. Die x-Erstreckung der Seiten-Abdeckteile 27 ist insbesondere gleich der x-Erstreckung des Zentral-Abdeckteils 29.

Wie in der Figur 1 gezeigt, sind die Seiten-Abdeckteile 27 auf der Oberseite der Tragestruktur 3 angeordnet und zwar in seitlichen y-Bereichen der Tragestruktur 3. Die Seiten-Abdeckteile 27 dienen insbesondere dazu, die seitlichen Kammern 12 abzudecken. Zweckmäßigerweise weisen die Seiten-Abdeckteile 27 auf ihrer in y-Richtung äußeren Seite jeweils einen nach unten gebogenen Abschnitt auf, der an den Längsseiten 24 der Tragestruktur 3 anliegt.

Als Nächstes soll auf die in der Figur 8 gezeigten Eckbereich-Abdeckteile 27 eingegangen werden.

Die Eckbereich-Abdeckteile 27 sind länglich ausgeführt und mit ihrer Längsachse parallel zur y-Richtung ausgerichtet. Die Eckbereich-Abdeckteile 27 sind mit ihrer flächenmäßig größten Seite normal zur z-Richtung ausgerichtet. Die Eckbereich-Abdeckteile 27 verfügen jeweils über einen plattenförmigen Horizontalabschnitt 37, an den sich in y-Richtung ein plattenförmiger Vertikalabschnitt 38 anschließt, der orthogonal zu dem Horizontalabschnitt 37 ausgerichtet ist.

Wie in der Figur 1 gezeigt, sind die Eckbereich-Abdeckteile 27 auf der Oberseite der Tragestruktur 3 angeordnet, und zwar in den vier Eckbereichen der Oberseite. Die Vertikalabschnitte 38 liegen jeweils an den Längsseiten 24 der Tragestruktur 3 an.

Die Eckbereich-Abdeckteile 27 ragen in x-Richtung stirnseitig über die Tragestruktur 3, insbesondere die Stirnteile 5, hinaus. Die Eckbereich-Abdeckteile 27 stellen insbesondere eine Abdeckung für die nachstehend noch erläuterten Radaufhängungen bereit. Optional kann an einem oder mehreren Eckbereich-Abdeckteilen 27 ein Sensor befestigt sein. Ein oder mehrere Eckbereich-Abdeckteile 27 sind insbesondere als Sensoraufnahme ausgebildet.

Gemäß einer alternativen Ausgestaltung sind nur zwei Eckbereich-Abdeckteile vorhanden, wobei jedes der beiden Eckbereich-Abdeckteile zwei jeweilige Eckbereiche der Oberseite abdeckt. Jedes der beiden Eckbereich-Abdeckteile hat zweckmäßigerweise die Form eines umgedrehten U.

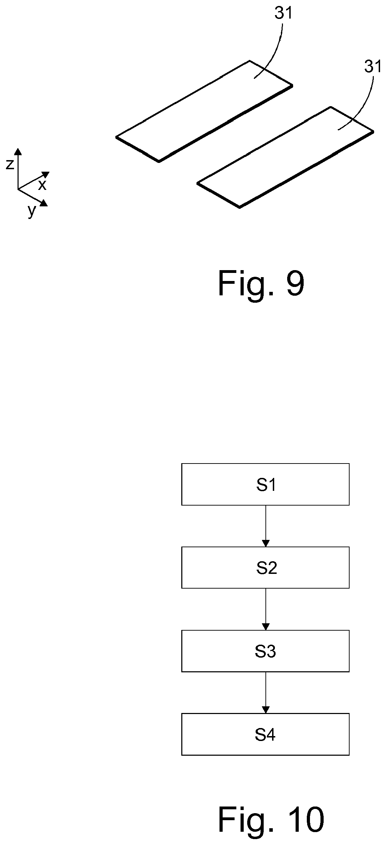

Die Figur 9 zeigt die Boden-Abdeckteile 31. Die Boden-Abdeckteile 31 sind exemplarisch rechteckig und plattenförmig ausgeführt. Die Boden-Abdeckteile 31 sind insbesondere Bodenbleche. Die Boden-Abdeckteile 31 dienen dazu, den inneren Bereich der Tragestruktur 3 nach unten hin abzudecken. Zweckmäßigerweise decken die Boden-Abdeckteile 31 nicht die gesamte Unterseite der Tragestruktur 3 ab, sondern lassen in y-Richtung einen Zentralbereich nach unten hin frei, insbesondere ist die mittlere Kammer 12 nach unten offen.

Die Boden-Abdeckteile 31 sind zweckmäßigerweise als Einschübe jeweils zwischen ein äußeres Seitenteil 7 und ein inneres Seitenteil 8 eingesetzt.

Das Zentral-Abdeckteil 29 und die Seiten-Abdeckteile 28 bilden zweckmäßigerweise eine obere Abdeckung für den inneren Bereich der Tragestruktur 3. Alternativ zu dem Zentral-Abdeckteil 29 und den Seiten-Abdeckteilen 28 kann die Abdeckung des inneren Bereichs der Tragestruktur 3 auch durch ein einstückiges, insbesondere rechteckiges, Abdeckteil erfolgen.

Die Abdeckteile 27, 28 und 29 bilden zusammen die Oberseite des Transportroboters 10 und fungieren insbesondere als Ladefläche. Diese Abdeckteile 27, 28, 29 sind insbesondere dazu ausgebildet, entsprechende Lasten aufzunehmen. Zweckmäßigerweise liegen die Abdeckteile 27, 28, 29 in derselben x-y-Ebene und überlappen vorzugsweise nicht.

Im Folgenden soll unter Bezugnahme auf die Figur 3 näher auf die Antriebseinrichtung 9 eingegangen werden:
Die Antriebseinrichtung 9 umfasst exemplarisch eine Fahrantriebseinrichtung und eine Hubantriebseinrichtung. Alternativ dazu kann die Antriebseinrichtung 9 auch nur eine Fahrantriebseinrichtung und keine Hubantriebseinrichtung umfassen. Mit dem Begriff "Fahrantriebseinrichtung" ist die Gesamtheit derjenigen Komponenten gemeint, durch die ein Verfahren des Transportroboters 10 in einer x-y-Ebene erzielt wird, also insbesondere diejenigen Komponenten, mit denen die Räder 2 zur Rotation um ihre Radachse angetrieben werden. Mit dem Begriff "Hubantriebseinrichtung" ist die Gesamtheit derjenigen Komponenten gemeint, durch die ein vertikaler Hub und/oder eine Neigung der Oberseite 21 des Transportroboters 10 erzielt wird, insbesondere diejenigen Komponenten, mit denen die Räder 2 um eine (von den Radachsen verschiedene) horizontale Schwenkachse, insbesondere eine y-Achse, verschwenkt werden können.

Die Antriebseinrichtung 9 ist ausgebildet, durch Verschwenken der Räder 2 um eine horizontale Schwenkachse einen Hub der Oberseite 21 des Roboterkörpers 1 in z-Richtung und/oder eine Neigung der Oberseite 21 des Roboterkörpers 1 um eine x-Achse und/oder eine Neigung der Oberseite 21 des Roboterkörpers 1 um eine y-Achse zu bewirken. Ein vertikaler Hub wird beispielsweise durch ein Verschwenken sämtlicher Räder 2 bewirkt. Zweckmäßigerweise kann ein Hub von bis zu 50mm erzielt werden. Eine Neigung um eine x-Achse wird beispielsweise durch Verschwenken zweier gegenüberliegender, auf zwei verschiedenen Stirnseiten 23 angeordneter Räder 2 bewirkt. Eine Neigung um eine y-Achse wird beispielsweise durch Verschwenken zweier auf der gleichen Stirnseite 23 angeordneter Räder 2 bewirkt. Die Antriebseinrichtung 9, insbesondere die Hubantriebseinrichtung, ist zweckmäßigerweise ausgebildet, gemäß einem bereitgestellten Steuerbefehl einen Hub und/oder eine Neigung auf einer der hier erläuterten Weisen bereitzustellen.

Die Antriebseinrichtung 9 ist strukturell in vier separate Antriebseinheiten 32 untergliedert. Exemplarisch ist für jedes Rad 2 eine eigene Antriebseinheit 32 vorgesehen. Die Antriebseinheiten 32 sind zweckmäßigerweise identisch und/oder zueinander spiegelsymmetrisch ausgebildet.

Jede Antriebseinheit 32 umfasst ein Rad 2, eine Fahrantriebseinheit zum Drehantrieb des Rads 2 und optional eine Hubantriebseinheit zum Verschwenken des Rads 2 um eine horizontale Achse.

Die Fahrantriebseinheiten sind Teil der vorstehend erwähnten Fahrantriebseinrichtung. Die Hubantriebseinheiten sind Teil der vorstehend erwähnten Hubantriebseinrichtung.

Zunächst zu den Fahrantriebseinheiten: Jede Fahrantriebseinheit umfasst einen (in der Figur 1 gezeigten) Drehantrieb 11, der insbesondere als elektrischer Drehantrieb ausgeführt ist. Der Drehantrieb 11 ist mit einem jeweiligen Rad 2 gekoppelt, beispielsweise über ein Getriebe und/oder einen Riemen und/oder eine Kette, um das Rad 2 in Drehbewegung um dessen Drehachse zu versetzen. Die Drehantriebe 11 haben exemplarisch eine zylindrische Form und sind jeweils im oberen z-Bereich der nachstehend erläuterten Radschwingen 15 angeordnet. Die Drehantriebe 11 sind exemplarisch gegenüber den Rädern 2 in y-Richtung nach innen versetzt. Über die Fahrantriebseinheiten können die Räder 2 unabhängig voneinander in Drehbewegung versetzt werden.

Die Antriebseinheiten 32 umfassen jeweils eine Radaufhängung an der das jeweilige Rad 2 aufgehängt ist. Zweckmäßigerweise umfasst jede Radaufhängung eine Radschwinge 15, an der das jeweilige Rad 2 (drehbar gelagert) befestigt ist. Die Radschwingen 15 sind vorzugsweise gelaserte Teile. Ferner umfasst jede Radaufhängung zweckmäßigerweise eine in y-Richtung verlaufende Aufhängungswelle 17, an der die Radschwinge 15 befestigt ist. Die Radaufhängungen sind an den Stirnseiten 23 des Roboterkörpers 1 angeordnet. Die Aufhängungswellen 17 sind jeweils relativ zum Roboterkörper 1 drehbar gelagert. Zweckmäßigerweise sind die Radaufhängungen an den Radaufhängungs-Befestigungsteilen 26 befestigt.

Als Nächstes soll auf die Hubantriebseinheiten eingegangen werden. Jede Hubantriebseinheit ist ausgebildet, wenigstens ein Rad 2 um eine horizontale Schwenkachse zu verschwenken. Exemplarisch umfasst jede Hubantriebseinheit einen Linearantrieb 18, über den die Verschwenkung des jeweiligen Rads 2 bewirkt werden kann. Der Linearantrieb 18 verfügt über ein linear antreibbares Antriebselement 19, hier exemplarisch eine Antriebsstange, die über einen Kopplungsabschnitt 16 mit der Aufhängungswelle 17 gekoppelt ist. Bei linearem Antrieb des Antriebselements 19 wird die Aufhängungswelle 17 über den Kopplungsabschnitt 16 in Drehbewegung versetzt, so dass das Rad 2 um die durch die Aufhängungswelle 17 definierte Schwenkachse verschwenkt wird.

Die Linearantriebe 18 sind exemplarisch in y-Richtung in einem zentralen Bereich der Tragestruktur 3 angeordnet, insbesondere in der mittleren Kammer 12. Die Antriebselemente 19 verlaufen exemplarisch in x-Richtung. Zweckmäßigerweise erstrecken sich die Antriebselemente 19 in x-Richtung bis vor die Stirnteile 5; ragen in x-Richtung also über die Stirnteile 5 hinaus. Die Antriebselemente 19 verlaufen insbesondere unter den Stirnteilen 5.

Bei der gezeigten Ausgestaltung ist für jedes Rad 2 ein eigener Linearantrieb 18 vorhanden. Exemplarisch sind also vier Linearantriebe 18 vorhanden.

Alternativ dazu kann auch nur ein Linearantrieb pro Stirnseite vorhanden sein. In diesem Fall wird ein Linearantrieb dazu verwendet, um beide Räder einer Stirnseite zusammen zu verschwenken. Hierfür können die auf der gleichen Stirnseite befindlichen Aufhängungswellen drehfest miteinander gekoppelt sein. Es werden dann nur zwei Linearantriebe benötigt.

Gemäß einer weiteren Ausgestaltung wird die Fahrantriebseinrichtung dazu verwendet, die Verschwenkung der Räder und damit den Hub bereitzustellen. In diesem Fall wird keine Hubantriebseinrichtung, insbesondere kein Linearantrieb, benötigt. Die Fahrantriebseinrichtung ist in diesem Fall ausgebildet, durch gegenläufigen Drehantrieb der Räder 2 ein Verschwenken der Räder 2 um die horizontale Schwenkachse und damit einen Hub der Oberseite des Roboterkörpers 1 zu bewirken. Insbesondere werden die Räder 2 einer der Stirnseiten 23 gegenläufig zu den Rädern 2 der anderen Stirnseite drehangetrieben. Zweckmäßigerweise sind bei dieser Ausgestaltung Federelemente vorhanden, die die Räder 2 in eine bestimmte Schwenkstellung vorspannen.

Die Antriebseinrichtung umfasst ferner eine (in den Figuren nicht gezeigte) Steuereinrichtung, die eine GPS-Einheit, Inertiale Messeinheit, Laser-Einheit, LIDAR-Einheit und/oder optische Lokalisationseinheit umfasst. Die optische Lokalisationseinheit ist ausgebildet, Bilder von einem Boden und/oder einer Decke aufzunehmen und auf Basis der aufgenommenen Bilder die Position des Transportroboters 10 zu bestimmen. Die Steuereinrichtung ist insbesondere ausgebildet, den Transportroboter 10 zu einem vorgegebenen Ziel zu navigieren.

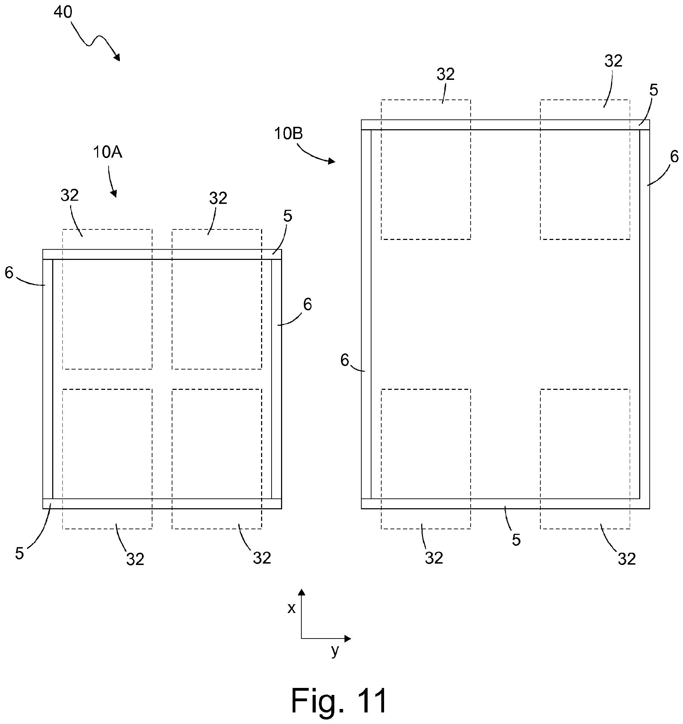

Die Figur 11 zeigt eine schematische Darstellung einer Anordnung 40 umfassend einen ersten Transportroboter 10A und einen zweiten Transportroboter 10B, die jeweils wie der Transportroboter 10 ausgebildet sind. Die beiden Transportroboter 10A, 10B unterscheiden sich in der x-Erstreckung der Seitenteile 6 und/oder der y-Erstreckung der Stirnteile 5 voneinander. Die beiden Transportroboter 10A, 10B weisen jeweils eine baugleiche Antriebseinrichtung 9 auf. Mit der Formulierung "baugleiche Antriebseinrichtung" soll insbesondere gemeint sein, dass die Antriebseinheiten 32 des einen Transportroboters 10A baugleich zu den Antriebseinheiten 32 des anderen Transportroboters 10B ausgebildet sind. Mit "Antriebseinheit" ist in diesem Zusammenhang insbesondere die Kombination aus Fahrantriebseinheit und Hubantriebseinheit gemeint, also insbesondere die Kombination aus Rad 2, Drehantrieb 11, Radschwinge 15, Aufhängungswelle 17, Kopplungsabschnitt 16, Antriebselement 19 und/oder Linearantrieb 18. Wie in der Figur 11 gezeigt, können sich die Beabstandungen der Antriebseinheiten 32 zueinander zwischen den beiden Transportrobotern 10A, 10B unterscheiden.

Die Figur 10 zeigt ein Flussdiagramm eines Verfahrens zur Herstellung eines vorstehend beschriebenen Transportroboters 10.

Das Verfahren beginnt mit dem Schritt S1, bei dem die Antriebseinrichtung 9 bereitgestellt wird.

Als Antriebseinrichtung 9 werden beispielsweise mehrere, insbesondere vier, Antriebseinheiten 32 bereitgestellt, die exemplarisch jeweils eine Fahrantriebseinheit und eine Hubantriebseinheit umfassen, also insbesondere jeweils ein Rad 2, einen Drehantrieb 11, eine Radschwinge 15, eine Aufhängungswelle 17, einen Kopplungsabschnitt 16, ein Antriebselement 19 und/oder einen Linearantrieb 18.

Alternativ dazu kann die Antriebseinrichtung 9 zu diesem Zeitpunkt auch ohne Radschwinge 15 und/oder Räder 2 bereitgestellt werden.

Ferner werden beim Schritt S1 insbesondere der Akku und/oder die Steuereinrichtung bereitgestellt.

Zweckmäßigerweise werden bei dem Schritt S1 diejenigen Bauteile des Transportroboters 10 bereitgestellt, die von der gewünschten x-Erstreckung, y-Erstreckung, Unterfahrhöhe und/oder Hub des herzustellenden Transportroboters 10 unabhängig sind. Dies sind insbesondere die vorgenannten Komponenten.

Das Verfahren umfasst ferner den Schritt S2, bei dem individuellen Maße für eine x-Erstreckung und y-Erstreckung des Transportroboters 10 bereitgestellt werden. Bei dem Schritt S2 können optional ferner individuelle Werte einer Unterfahrhöhe und/oder eines Hubs des Transportroboters 10 bereitgestellt werden.

Es sei darauf hingewiesen, dass das Verfahren auch mit dem Schritt S2 beginnen kann und der Schritt S1 nach dem Schritt S2 erfolgen kann. Ferner können die Schritte S1 und S2 parallel erfolgen.

Die Bereitstellung der individuellen Maße erfolgt beispielsweise durch Eingabe in eine Benutzerschnittstelle und/oder durch elektronische Übermittlung.

Ein, mehrere oder sämtliche individuelle Maße werden zweckmäßigerweise frei gewählt. Exemplarisch kann ein, mehrere oder sämtliche Maße auf einer kontinuierlichen Skala frei gewählt werden, vorzugsweise innerhalb vorgegebener Grenzen. Beispielsweise kann für die x-Erstreckung des Transportroboters 1, insbesondere der Oberseite 21, ein Maß zwischen 600mm und 1200mm frei gewählt werden. Für die y-Erstreckung des Transportroboters 1, insbesondere der Oberseite 21, kann vorzugsweise ein Maß zwischen 400mm und 800mm frei gewählt werden. Die Maße können insbesondere auf einen Millimeter genau gewählt werden. Die kontinuierliche Skala, auf der die Maße frei gewählt werden können, ist exemplarisch eine Millimeter-Skala. Zweckmäßigerweise können die individuellen Maße unabhängig voneinander frei gewählt werden. Insbesondere kann das Maß für die x-Erstreckung unabhängig von dem Maß für die y-Erstreckung frei gewählt werden. Ferner kann das Maß für die y-Erstreckung unabhängig von dem Maß für die x-Erstreckung frei gewählt werden.

Zweckmäßigerweise umfasst das Verfahren einen Schritt, bei dem ein Benutzer ein, mehrere oder sämtliche individuelle Maße frei wählen kann, insbesondere gemäß der vorstehenden Erläuterung. Beispielsweise wird eine Benutzeroberfläche bereitgestellt, die dem Benutzer eine freie Auswahlmöglichkeit für die individuellen Maße bereitstellt.

Zweckmäßigerweise werden die individuellen Maße auf einer Berechnungseinheit bereitgestellt, die ausgebildet ist, unter Verwendung eines hinterlegten Berechnungsmodells, beispielsweise einer Design-Engine, die Maße bestimmter Bauteile des Transportroboters 10 auf Basis der individuellen Maße zu berechnen. Insbesondere werden die Maße derjenigen Bauteile berechnet, die von der x-Erstreckung, y-Erstreckung, Unterfahrhöhe und/oder Hub des herzustellenden Transportroboters 10 abhängig sind.

Beispielsweise werden die Maße der folgenden Bauteile automatisiert berechnet (sofern diese Bauteile für den herzustellenden Transportroboter benötigt werden): x-Erstreckung der Seitenteile 6, 8, y-Erstreckung der Stirnteile 5, y-Erstreckung der Radaufhängungs-Befestigungsteile 26, x-Erstreckung und y-Erstreckung der Seiten-Abdeckteile 28, y-Erstreckung der Eckbereich-Abdeckteile 27, x-Erstreckung des Zentral-Abdeckteils 29, x-Erstreckung und y-Erstreckung der Boden-Abdeckteile 31 und/oder Länge der Radschwingen 15.

Zweckmäßigerweise werden auf Basis der bereitgestellten individuellen Maße und/oder der berechneten Maße automatisiert Herstellungsparameter berechnet, insbesondere Laserschnittparameter für die gelaserten Blechteile und/oder Längenparameter zum Zusägen (beispielsweise mittels einer Kappsäge) der als Strangpressprofile ausgeführten Teile.

Das Verfahren umfasst ferner den Schritt S3, der nach dem Schritt S1 durchgeführt wird, nämlich nach dem Bereitstellen der Antriebseinrichtung. Bei dem Schritt S3 wird der Roboterkörper 1 gemäß den bereitgestellten Maßen hergestellt, insbesondere auf Basis der Herstellungsparameter. Hierfür werden die Stirnteile 5 gemäß dem Maß für die y-Erstreckung hergestellt, insbesondere gelasert. Ferner werden die Seitenteile 6 gemäß dem Maß für die x-Erstreckung hergestellt, insbesondere zugesägt.

Ferner werden insbesondere die Radaufhängungs-Befestigungsteile 26, Seiten-Abdeckteile 28, Eckbereich-Abdeckteile 27, das Zentral-Abdeckteil 29, die Boden-Abdeckteile 31 und/oder die Radschwingen 15 gemäß den individuellen Maßen, insbesondere gemäß den Herstellungsparametern hergestellt.

Der Roboterkörper 1 wird daraufhin zusammengesetzt.

Bei dem sich anschließenden Schritt S4 wird schließlich die Antriebseinrichtung an den Roboterkörper 1 montiert.

Gemäß dem erläuterten Verfahren werden also zuerst die Bauteile bereitgestellt, die unabhängig von den individuellen Maßen stets gleich dimensioniert sind - insbesondere die Antriebseinrichtung 9 - und erst danach werden die Bauteile - insbesondere der Roboterkörper 1 - bereitgestellt, deren Dimensionierung von den individuellen Maßen abhängt.

Die Herstellung einer Mehrzahl von Transportrobotern 10, beispielsweise die Herstellung der Anordnung 40, kann durch mehrfache Ausführung des vorgenannten Verfahrens erfolgen. Die mehrfache Ausführung kann parallel oder sequentiell erfolgen.

Gemäß einer möglichen Ausgestaltung des vorstehend beschriebenen Transportroboters 10 ist die Antriebseinrichtung ausgebildet, zur Bereitstellung des Hubs der Oberseite 21 die Räder 2 nach Innen hin zu der Mitte des Roboterkörpers 1 zu verschwenken.

Gemäß einer weiteren möglichen Ausgestaltung des vorstehend beschriebenen Transportroboters 10 umfasst die Antriebseinrichtung zwei vordere Antriebseinheiten und zwei hintere Antriebseinheiten und der Abstand zwischen den zwei vorderen Antriebseinheiten ist geringer als der Abstand zwischen den zwei hinteren Antriebseinheiten.

Gemäß einer weiteren möglichen Ausgestaltung des vorstehend beschriebenen Transportroboters ist jede Antriebseinheit 32 um eine jeweilige horizontale Schwenkachse verschwenkbar, um einen Hub der Oberseite 21 in z-Richtung zu bewirken. Die horizontalen Schwenkachsen sind in vertikaler Richtung zweckmäßigerweise jeweils tiefer angeordnet als eine Antriebsachse der jeweiligen Fahrantriebseinheit und höher angeordnet als eine Radachse des jeweiligen Rads.

Gemäß einer weiteren möglichen Ausgestaltung ist der Transportroboter 10 insbesondere in Entsprechung zu dem nachstehend erläuterten Transportroboter 20 ausgebildet. Zweckmäßigerweise sind die Antriebseinheiten 32 und/oder die Hubantriebseinheiten des Transportroboters 10, wie die Antriebseinheiten 32 und/oder die Hubantriebseinheiten des nachstehend erläuterten Transportroboters 20 ausgebildet.

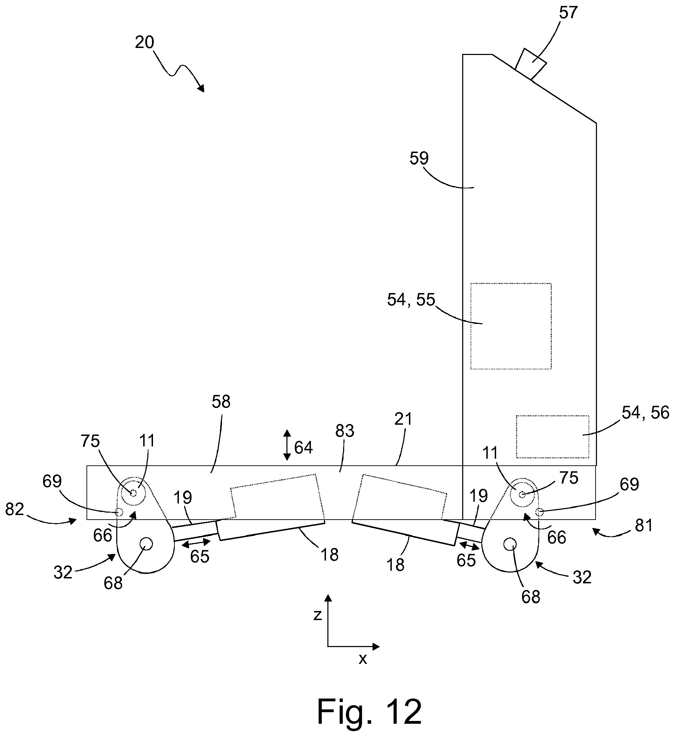

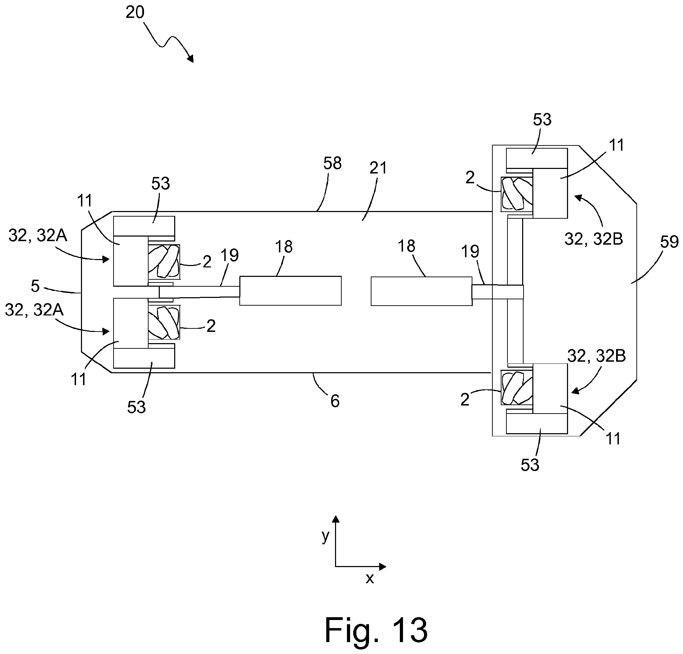

Im Folgenden soll unter Bezugnahme auf die Figuren 12 und 13 auf einen weiteren Transportroboter 20 eingegangen werden. Der weitere Transportroboter 20 kann auch als dritter Transportroboter und/oder als KLT-Transportroboter bezeichnet werden. Die Abkürzung "KLT" steht für Kleinladungsträger.

Der Transportroboter 20 umfasst einen horizontalen Roboterabschnitt 58. Die Oberseite 21 des horizontalen Roboterabschnitts 58 definiert eine x-y-Ebene, die als Ladefläche für Transportgüter und/oder zum Tragen eines Instruments dient. Der Transportroboter 20 umfasst ferner eine Antriebseinrichtung, die eine Mehrzahl von am horizontalen Roboterabschnitt 58 angeordneten Rädern 2 umfasst. Die Antriebseinrichtung ist ausgebildet, durch Drehantrieb der Räder 2 den Transportroboter 20 in einer x-y-Fahrebene zu verfahren.

Zweckmäßigerweise ist die Oberseite 21 des horizontalen Roboterabschnitts 58 eben ausgeführt. Vorzugsweise ist der horizontale Roboterabschnitt 58 länglich ausgeführt und mit seiner Längsachse horizontal ausgerichtet. Die Richtung der Längsachse des horizontalen Roboterabschnitts 58 soll als x-Richtung bezeichnet werden. Die y-Richtung verläuft horizontal und orthogonal zur x-Richtung. Die z-Richtung, die auch als vertikale Richtung bezeichnet werden soll, verläuft orthogonal zur x-Richtung und orthogonal zur y-Richtung. Der horizontale Roboterabschnitt 58 ist zweckmäßigerweise flach ausgeführt. Die z-Erstreckung des horizontalen Roboterabschnitts 58 ist vorzugsweise kleiner als die y-Erstreckung des horizontalen Roboterabschnitts 58 und kleiner als die x-Erstreckung des horizontalen Roboterabschnitts 58. Der horizontale Roboterabschnitt 58 kann als Roboterkörper bezeichnet werden. Exemplarisch ist der horizontale Roboterabschnitt 58 quaderförmig mit horizontalen Ausbuchtungen an seinem (in x-Richtung) hinteren Endabschnitt 81. Die horizontalen Ausbuchtungen erstrecken sich in y-Richtung nach außen. Der (in x-Richtung) vor dem hinteren Endabschnitt 81 liegende Teil des horizontalen Roboterabschnitt 58 soll auch als Trageabschnitt 83 bezeichnet werden. Exemplarisch hat der horizontale Roboterabschnitt 58 (in der Draufsicht) eine T-förmige horizontale Außenkontur, wie dies in der Figur 13 zu sehen ist. Gemäß einer alternativen Ausgestaltung kann der horizontale Roboterabschnitt 58 auch quaderförmig ohne horizontale Ausbuchtungen ausgeführt sein.

Vorzugsweise beträgt die x-Erstreckung des horizontalen Roboterabschnitts 58 mindestens 50 cm und/oder maximal 1 m. Die y-Erstreckung des Trageabschnitts 83 beträgt zweckmäßigerweise wenigstens 15 cm und/oder maximal 22,7 cm.

Optional umfasst der Transportroboter 20 einen vertikalen Roboterabschnitt 59, der sich von dem horizontalen Roboterabschnitt 58, insbesondere von dem hinteren Endabschnitt 81, vertikal nach oben erstreckt. Exemplarisch ist oben an dem vertikalen Roboterabschnitt 59 ein Notausschalter 57 angeordnet. Die z-Erstreckung des vertikalen Roboterabschnitts 59 ist zweckmäßigerweise größer als 50% der x-Erstreckung des horizontalen Roboterabschnitts 58 und/oder kleiner als 150% der x-Erstreckung des horizontalen Roboterabschnitts 58.

Vorzugsweise ist der Transportroboter 20 L-förmig (in einer Seitenansicht). Zweckmäßigerweise stellt der horizontale Roboterabschnitt 58 den horizontalen Schenkel der L-Form dar und der vertikale Roboterabschnitt 59 stellt den vertikalen Schenkel der L-Form dar. Vorzugsweise beträgt die x-Erstreckung des Transportroboters 20 wenigstens 50 cm und/oder maximal 1 m. Die y-Erstreckung des Transportroboters 20 beträgt zweckmäßigerweise wenigstens 20 cm und/oder maximal 40 cm. Die z-Erstreckung des Transportroboters 20 beträgt zweckmäßigerweise wenigstens 50 cm und/oder maximal 1,20 m.

Vorzugsweise umfasst die Antriebseinrichtung eine Fahrantriebseinrichtung zum Drehantrieb der Räder 2. Die Antriebseinrichtung, insbesondere die Fahrantriebseinrichtung, umfasst zweckmäßigerweise eine Mehrzahl an separaten Antriebseinheiten 32. Jede Antriebseinheit 32 umfasst ein Rad 2 und eine Fahrantriebseinheit zum Drehantrieb des Rads 2. Jede Antriebseinheit 32 ist zweckmäßigerweise als eigene Baugruppe ausgeführt. Jede Fahrantriebseinheit umfasst zweckmäßigerweise einen elektrischen Drehantrieb 11. Jeder elektrische Drehantrieb 11 hat zweckmäßigerweise eine zylindrische Form. Exemplarisch ist jede Fahrantriebseinheit, insbesondere jeder Drehantrieb 11, vertikal über dem jeweiligen Rad 2 angeordnet. Exemplarisch liegt jedes Rad 2 (insbesondere vollständig) innerhalb des y-Bereichs des zugehörigen Drehantriebs 11. Exemplarisch verfügt jede Antriebseinheit 32 über ein Getriebe 53, beispielsweise ein Riemengetriebe, über das das jeweilige Rad 2 mit dem jeweiligen Drehantrieb gekoppelt ist. Die Räder 2 sind zweckmäßigerweise omnidirektionale Räder, insbesondere Mecanum-Räder. Gemäß einer möglichen Ausführungsform wird eine Antriebseinheit 32 für sich genommen bereitgestellt.

Jede Fahrantriebseinheit, insbesondere jeder Drehantrieb 11, verfügt zweckmäßigerweise über eine Antriebsachse 75, die die Drehachse der von der Fahrantriebseinheit bereitgestellten Drehbewegung darstellt. Die Antriebsachsen 75 sind zweckmäßigerweise parallel zur y-Richtung ausgerichtet. Ferner umfasst jedes Rad 2 eine Radachse 68, um die sich das jeweilige Rad 2 dreht, um den Transportroboter 20 zu verfahren. Die Radachsen 68 sind zweckmäßigerweise parallel zu den Antriebsachsen 75 und/oder parallel zur y-Richtung ausgerichtet.

Jede Antriebseinheit 32 ist zweckmäßigerweise relativ zum horizontalen Roboterabschnitt 58 verschwenkbar gelagert, und zwar insbesondere um eine jeweilige horizontale Schwenkachse 69. Die horizontalen Schwenkachsen 69 sind zweckmäßigerweise parallel zur y-Richtung ausgerichtet. Bevorzugt lässt sich durch ein Verschwenken der Antriebseinheiten 32 um die horizontalen Schwenkachsen 69, ein Hub 64 der Oberseite 21 in z-Richtung bewirken. Die horizontalen Schwenkachsen 69 sind in vertikaler Richtung jeweils tiefer als die jeweiligen Antriebsachsen 75 angeordnet und höher als die jeweiligen Radachsen 68 angeordnet. Die horizontalen Schwenkachsen 69 sind also in z-Richtung zwischen den Antriebsachsen 75 und den Radachsen 68 angeordnet. Insbesondere sind die horizontalen Schwenkachse 69 in z-Richtung mittig in Bezug auf die Antriebseinheiten 32 angeordnet.

Exemplarisch umfassen die Antriebseinheiten 32 zwei vordere Antriebseinheiten 32A und zwei hintere Antriebseinheiten 32B. Die Begriffe "vorne" und "hinten" beziehen sich auf die x-Richtung. Die zwei vorderen Antriebseinheiten 32A befinden sich (in x-Richtung) in der vorderen Hälfte, insbesondere in dem vorderen Viertel, des horizontalen Roboterabschnitts 58. Vorzugsweise befinden sich die zwei vorderen Antriebseinheiten 32A im Bereich des vorderen Endabschnitts 82 des horizontalen Roboterabschnitts 58. Zweckmäßigerweise sind die beiden vorderen Antriebseinheiten 32A an der gleichen Position in x-Richtung angeordnet. Die zwei hinteren Antriebseinheiten 32B befinden sich (in x-Richtung) in der hinteren Hälfte, insbesondere in dem hinteren Viertel, des horizontalen Roboterabschnitts 58. Vorzugsweise befinden sich die zwei hinteren Antriebseinheiten 32B im Bereich des hinteren Endabschnitts 81, insbesondere in dem von dem vertikalen Roboterabschnitt 59 eingenommenen x-Bereich. Zweckmäßigerweise sind die beiden hinteren Antriebseinheiten 32B an der gleichen Position in x-Richtung angeordnet.

Gemäß einer bevorzugten Ausgestaltung ist der Abstand (in y-Richtung) zwischen den zwei vorderen Antriebseinheiten 32A geringer als der Abstand zwischen den zwei hinteren Antriebseinheiten 32B. Exemplarisch befinden sich die beiden vorderen Antriebseinheiten 32A in y-Richtung innerhalb des Trageabschnitts 83. Die beiden hinteren Antriebseinheiten 32B befinden sich in y-Richtung zweckmäßigerweise zumindest teilweise (oder vollständig) außerhalb des von dem Trageabschnitt 83 eingenommenen y-Bereichs. Exemplarisch befinden sich die beiden hinteren Antriebseinheiten 32B in den horizontalen Ausbuchtungen des horizontalen Roboterabschnitts 58.

Gemäß einer alternativen Ausgestaltung ist der Abstand zwischen den zwei vorderen Antriebseinheiten gleich dem Abstand zwischen den zwei hinteren Antriebseinheiten.

Zweckmäßigerweise umfasst der Transportroboter 20 ferner eine Hubantriebseinrichtung zum Verschwenken der Räder 2, insbesondere der Antriebseinheiten 32, um die horizontalen Schwenkachsen 69. Die Hubantriebseinrichtung ist zweckmäßigerweise an dem horizontalen Roboterabschnitt 58 angeordnet, und zwar insbesondere in x-Richtung mittig. Insbesondere befindet sich die Hubantriebseinrichtung in x-Richtung zwischen den vorderen Antriebseinheiten 32A und den hinteren Antriebseinheiten 32B. Exemplarisch umfasst die Hubantriebseinrichtung wenigstens eine Hubantriebseinheit mit einem Linearantrieb 18. Zweckmäßigerweise sind zwei Hubantriebseinheiten mit jeweils einem Linearantrieb 18 vorhanden. Jeder Linearantrieb 18 verfügt zweckmäßigerweise über ein linear antreibbares Antriebselement 19. Die Antriebselemente 19 sind zweckmäßigerweise mit den Antriebseinheiten 32 gekoppelt. Eine erste Hubantriebseinheit dient zweckmäßigerweise zum Verschwenken der vorderen Antriebseinheiten 32A und eine zweite Hubantriebseinheit dient zum Verschwenken der hinteren Antriebseinheiten 32B.

Gemäß einer alternativen Ausgestaltung sind vier Hubantriebseinheiten vorhanden, wobei jede Hubantriebseinheiten zum Verschwenken einer jeweiligen Antriebseinheit dient.

Gemäß einer weiteren alternativen Ausgestaltung sind drei Hubantriebseinheiten, insbesondere genau drei Hubantriebseinheiten vorhanden. Zweckmäßigerweise umfasst jede Hubantriebseinheit genau einen Linearantrieb.

Vorzugsweise ist der Transportroboter 20 ausgebildet, durch Verschwenken der Räder 2, insbesondere der Antriebseinheiten 32, um die horizontalen Schwenkachsen 69 den Hub 64 der Oberseite 21 in z-Richtung zu bewirken. Zweckmäßigerweise ist der Transportroboter 20 ausgebildet, mit den Linearantrieben 18 Linearbewegungen 65 der Antriebselemente 19 durchzuführen, um Schwenkbewegungen 66 der Antriebseinheiten 32 um die Schwenkachsen 69 zu erzeugen, und dadurch den Hub 64 des horizontalen Roboterabschnitts 58 (und somit der Oberseite 21) zu bewirken.

Der Hub 64 beträgt zweckmäßigerweise wenigstens 2cm, 3cm oder 4cm. Vorzugsweise beträgt der Hub 64 maximal 8cm, 7cm, 6cm oder 5cm. Bevorzugt liegt der Hub 64 in dem Bereich von 2cm bis 7cm. Vorzugsweise ist die Oberseite 21 vor dem Hub 64 und/oder nach dem Hub 64, also insbesondere in abgesenkter, insbesondere maximal abgesenkter, und/oder angehobener, insbesondere maximal angehobener Stellung, parallel zu dem Boden, auf dem der Transportroboter steht ausgerichtet und/oder senkrecht zum Gravitationsvektor ausgerichtet.

Gemäß einer bevorzugten Ausgestaltung ist die Antriebseinrichtung ausgebildet, zur Bereitstellung des Hubs 64 die Räder 2, insbesondere die Antriebseinheiten 32, nach Innen hin zu der Mitte (in x-Richtung) des horizontalen Roboterabschnitts 58 zu verschwenken. Zweckmäßigerweise werden die vorderen Antriebseinheiten 32A nach hinten und die hinteren Antriebseinheiten 32B nach vorne verschwenkt, um den Hub 64 zu bewirken, insbesondere, um die Oberseite 21 abzusenken.

Zweckmäßigerweise sind die Antriebseinheiten 32 in jeder möglichen Schwenkstellung stets zur Mitte (in x-Richtung) des horizontalen Roboterabschnitts 58 hin angewinkelt. Insbesondere sind in jeder möglichen Schwenkstellung der Antriebseinheiten 32 die Radachsen 68 stets näher an der Mitte (in x-Richtung) des horizontalen Roboterabschnitts 58 als die Schwenkachsen 69. Beispielsweise ist der Transportroboter 20 ausgebildet, zum Absenken der Oberseite 21 die Antriebselemente 19 nur einzufahren (und insbesondere nicht auszufahren). Ferner ist der Transportroboter 20 zweckmäßigerweise ausgebildet, zum Anheben der Oberseite 21 die Antriebselemente 19 nur auszufahren (und insbesondere nicht einzufahren).

Zweckmäßigerweise lässt sich die Oberseite 21 bis auf weniger als 120 mm, 116 mm oder 100 mm gegenüber dem Boden, auf der die Räder 2 stehen, absenken. Die Unterfahrhöhe des horizontalen Roboterabschnitts 58, insbesondere des Trageabschnitts 83, beträgt zweckmäßigerweise 115 mm oder weniger, insbesondere 99 mm oder weniger.

Gemäß einer rein optionalen Ausgestaltung umfasst der horizontale Roboterabschnitt 58 eine Tragestruktur, die in y-Richtung verlaufende Stirnteile 5 und in x-Richtung verlaufende Seitenteile 6 umfasst. Zweckmäßigerweise bestimmt die y-Erstreckung der Stirnteile 5 die y-Erstreckung der Oberseite 21 und die x-Erstreckung der Seitenteile 6 bestimmt die x-Erstreckung der Oberseite 21. Vorzugsweise sind die Stirnteile 5 Stirnbleche. Die Seitenteile 6 sind zweckmäßigerweise Bleche. Ferner können die Seitenteile 6 Strangpressprofile sein. Vorzugsweise sind die Stirnteile 5 gelaserte Stirnbleche und/oder die Seitenteile 6 sind gelaserte Bleche. Vorzugsweise umfasst die Tragestruktur eine Rahmenstruktur, die durch die Stirnteile 5 und die Seitenteile 6 gebildet wird. Optional umfasst die Tragestruktur in x-Richtung verlaufende innere Seitenteile, die einen inneren Bereich der Tragestruktur in mehrere Kammern unterteilen.

Exemplarisch umfasst der Transportroboter 20 eine Steuereinrichtung 54. Die Steuereinrichtung 54 umfasst zweckmäßigerweise eine Sensoreinheit 56, beispielsweise eine GPS-Einheit, eine inertiale Messeinheit, eine Laser-Einheit, eine LIDAR-Einheit und/oder eine optische Lokalisationseinheit. Ferner umfasst die Steuereinrichtung 54 zweckmäßigerweise eine Steuerelektronik 55, die insbesondere zur Ansteuerung der Antriebseinheiten 32, der Hubantriebseinheiten und/oder der Sensoreinheit 56 dient. Die Steuerelektronik 54 ist zweckmäßigerweise ausgebildet, ein autonomes Fahren des Transportroboters 20 und zweckmäßigerweise ein autonomes Aufladen von Transportgütern (mittels des Hubs 64) bereitzustellen. Zweckmäßigerweise erfolgt die Navigation anhand von optischen Aufnahmen des Bodens und/oder der Decke. Exemplarisch sind die Sensoreinheit 56 und/oder die Steuerelektronik 54 in dem vertikalen Roboterabschnitt 59 angeordnet. Ferner können die Sensoreinheit 56 und/oder die Steuerelektronik 54 auch in dem horizontalen Roboterabschnitt 58 angeordnet sein.

Gemäß einer weiteren möglichen Ausgestaltung ist der Transportroboter 20 insbesondere in Entsprechung zu dem vorstehend erläuterten Transportroboter 10 ausgebildet. Zweckmäßigerweise ist die Antriebseinrichtung des Transportroboters 20, insbesondere die Antriebseinheiten 32 und/oder die Hubantriebseinheiten, wie die Antriebseinheiten 32 und/oder die Hubantriebseinheiten des vorstehend erläuterten Transportroboters 10 ausgebildet. Ferner ist zweckmäßigerweise der horizontale Roboterabschnitt 58 des Transportroboters 20 wie der Roboterkörper 1 des Transportroboters 10 ausgebildet.

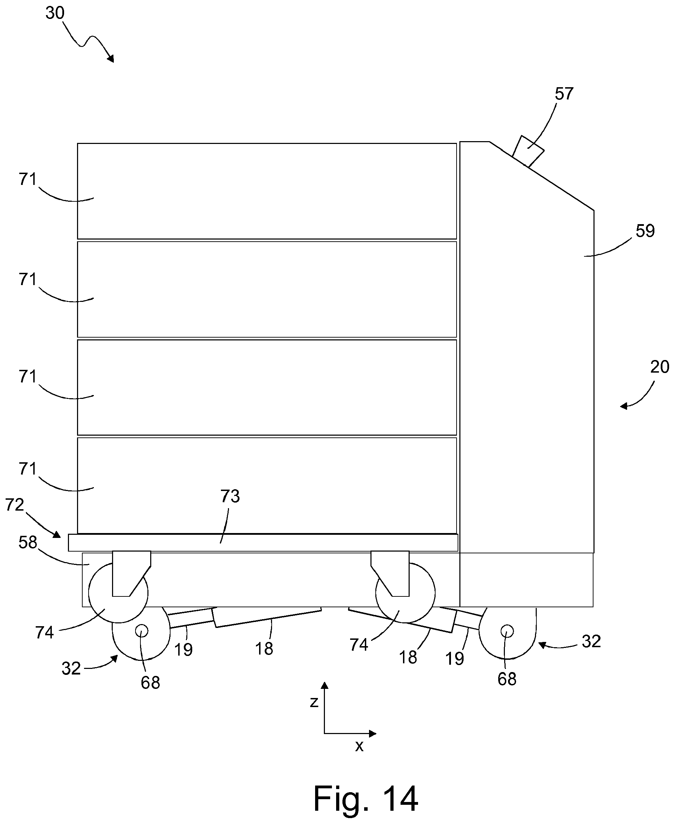

Die Figur 14 zeigt eine Anordnung 30 aus dem Transportroboter 20, einem Rollbrett 72 (kann auch als Trolley bezeichnet werden) und mehreren Transportkisten 71. Das Rollbrett 72 umfasst eine Trageplatte 73, an deren Unterseite vier Fahrrollen 74 angeordnet sind. Das Rollbrett 72, insbesondere die Trageplatte 73, liegt mit der Unterseite auf der Oberseite 21, insbesondere der Ladefläche, des horizontalen Roboterabschnitts 58 auf. Die Fahrrollen 74 sind in y-Richtung seitlich neben dem horizontalen Roboterabschnitt 58 angeordnet und zweckmäßigerweise gegenüber dem Boden angehoben. Auf der Oberseite des Rollbretts 72, insbesondere der Trageplatte 73, sind die Transportkisten 71 aufeinandergestapelt angeordnet und bilden einen vertikalen Stapel. Bei den Transportkisten handelt es sich vorzugsweise um Kleinladungsträger (KLT), die auch als Kleinlastträger, Eurokiste, Euronormbehälter oder Euronormbox bezeichnet werden können.

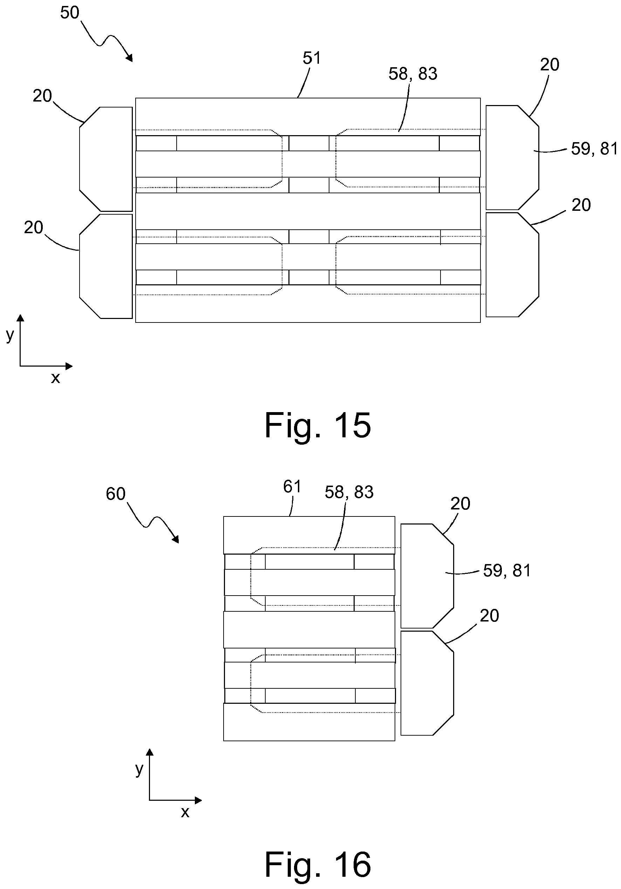

Die Figur 15 zeigt eine Anordnung 50 aus einer Transportpalette 51 und vier Transportrobotern 20, die zusammen die Transportpalette 51 tragen. Die Transportpalette 51 ist beispielsweise eine Europalette (kann auch als Europoolpalette bezeichnet werden). Jeder Transportroboter 20 ist zweckmäßigerweise mit seinem horizontalen Roboterabschnitt 58, insbesondere dem Trageabschnitt 83, in eine jeweilige Handhabungsöffnung der Transportpalette 51 eingeführt. Die hinteren Endabschnitte 81 und/oder vertikalen Roboterabschnitte 59 der Transportroboter 20 befindet sich vorzugsweise außerhalb der Handhabungsöffnungen und lassen sich zweckmäßigerweise aufgrund ihrer Breite nicht in die Handhabungsöffnungen einführen.

Die Figur 16 zeigt eine Anordnung 60 aus einer halben Transportpalette 61 und zwei Transportrobotern 20, die zusammen die halbe Transportpalette 61 tragen. Die halbe Transportpalette 61 ist beispielsweise eine Europalette (kann auch als Europoolpalette bezeichnet werden). Jeder Transportroboter 20 ist zweckmäßigerweise mit seinem horizontalen Roboterabschnitt 58, insbesondere dem Trageabschnitt 83, in eine jeweilige Handhabungsöffnung der halben Transportpalette 61 eingeführt. Die hinteren Endabschnitte 81 und/oder vertikalen Roboterabschnitte 59 der Transportroboter 20 befindet sich vorzugsweise außerhalb der Handhabungsöffnungen und lassen sich zweckmäßigerweise aufgrund ihrer Breite nicht in die Handhabungsöffnungen einführen.

Zweckmäßigerweise ist der Transportroboter 20 ausgebildet, automatisch seine Oberseite 21 abzusenken (durch ein Verschwenken der Antriebseinheiten 32), um mit seinem Trageabschnitt 83 unter ein auf dem Boden stehendes Transportgut, beispielsweise ein Rollbrett 72 und/oder eine Transportpalette 51, zu fahren, und dann automatisch seine Oberseite 21 anzuheben (durch ein Verschwenken der Antriebseinheiten), um das Transportgut auf die Oberseite 21 aufzuladen und das Transportgut gegenüber dem Boden anzuheben, so dass der Transportroboter 20 das Transportgut transportieren kann.

Nachfolgend soll ein Verfahren zur Herstellung von Transportrobotern unterschiedlicher Bauform beschrieben werden. Zweckmäßigerweise werden die Antriebseinheiten 32 und/oder die Hubantriebseinheiten als Standardbauteile für Transportroboter unterschiedlicher Bauform verwendet. Mit baugleichen Antriebseinheiten 32 und/oder baugleichen Hubantriebseinheiten lassen sich zweckmäßigerweise Transportroboter unterschiedlicher Bauform herstellen. Insbesondere lassen sich mit baugleichen Antriebseinheiten 32 und/oder baugleichen Hubantriebseinheiten ein Transportroboter erster Bauform und ein Transportroboter zweiter Bauform herstellen. Der Transportroboter erster Bauform ist beispielsweise der vorstehend beschrieben Transportroboter 10, insbesondere ein Transportroboter, bei dem die vorderen Räder 2 und die hinteren Räder 2, insbesondere die vorderen Antriebseinheiten 32 und die hinteren Antriebseinheiten 32, jeweils den gleichen Abstand (in y-Richtung) zueinander aufweisen. Ferner kann der Transportroboter erster Bauform ein Transportroboter ohne vertikalen Roboterabschnitt sein, also insbesondere ein Transportroboter mit einer insgesamt flachen Gestalt. Der Transportroboter zweiter Bauform ist beispielsweise der vorstehend beschriebene Transportroboter 20, insbesondere ein Transportroboter, bei dem die vorderen Räder 2, insbesondere die vorderen Antriebseinheiten 32A, einen geringeren Abstand (in y-Richtung) zueinander aufweisen als die hinteren Räder 2, insbesondere die hinteren Antriebseinheiten 32B. Ferner kann der Transportroboter zweiter Bauform ein Transportroboter mit vertikalem Roboterabschnitt 59 sein, also insbesondere ein Transportroboter mit einer L-förmigen Gestalt.

Vorzugsweise umfasst das Verfahren zur Herstellung von Transportrobotern unterschiedlicher Bauform die folgenden Schritte: Bereitstellen einer Mehrzahl an baugleichen Antriebseinheiten 32 und/oder baugleichen Hubantriebseinheiten, Herstellen eines Transportroboters erster Bauform mit ersten Antriebseinheiten 32 und/oder ersten Hubantriebseinheiten aus der bereitgestellten Mehrzahl an baugleichen Antriebseinheiten 32 und/oder baugleichen Hubantriebseinheiten, und Herstellen eines Transportroboters zweiter Bauform mit zweiten Antriebseinheiten 32 und/oder zweiten Hubantriebseinheiten aus der bereitgestellten Mehrzahl an baugleichen Antriebseinheiten 32 und/oder baugleichen Hubantriebseinheiten. Die erste Bauform unterscheidet sich von der zweiten Bauform.

## Patentansprüche

1. Transportroboter (10) mit einem quaderförmigen Roboterkörper (1), dessen Oberseite (21) eine x-y-Ebene definiert, die als Ladefläche für Transportgüter und/oder zum Tragen eines Instruments dient, und einer Antriebseinrichtung (9), die eine Mehrzahl von am Roboterkörper (1) angeordneten Rädern (2) umfasst und ausgebildet ist, durch Drehantrieb der Räder (2) den Transportroboter (10) in einer x-y-Fahrebene zu verfahren, wobei der Roboterkörper (1) über eine Tragestruktur (3) verfügt, die in y-Richtung verlaufende Stirnteile (5) und in x-Richtung verlaufende Seitenteile (6) umfasst, wobei die y-Erstreckung der Stirnteile (5) die y-Erstreckung der Oberseite (21) bestimmt und die x-Erstreckung der Seitenteile (6) die x-Erstreckung der Oberseite (21) bestimmt, **dadurch gekennzeichnet, dass** die Stirnteile (5) Stirnbleche sind und/oder die Seitenteile (6) Strangpressprofile sind.

2. Transportroboter (10), nach Anspruch 1, **dadurch gekennzeichnet, dass** die Antriebseinrichtung (9) ausgebildet ist, durch Verschwenken der Räder (2) um eine horizontale Schwenkachse einen Hub der Oberseite (21) in z-Richtung und/oder eine Neigung der Oberseite (21) um eine x-Achse und/oder eine Neigung der Oberseite (21) um eine y-Achse zu bewirken.

3. Transportroboter (10) nach Anspruch 2, **dadurch gekennzeichnet, dass** die Antriebseinrichtung (9) eine Fahrantriebseinrichtung zum Drehantrieb der Räder (2) und zusätzlich dazu eine Hubantriebseinrichtung zum Verschwenken der Räder (2) um eine horizontale Schwenkachse umfasst.

4. Transportroboter (10) nach Anspruch 3, **dadurch gekennzeichnet, dass** die Hubantriebseinrichtung eine Hubantriebseinheit mit einem Linearantrieb (18) umfasst.

5. Transportroboter nach einem der Ansprüche 2 bis 4, wobei die Antriebseinrichtung ausgebildet ist, zur Bereitstellung des Hubs der Oberseite die Räder nach Innen in Richtung hin zu der Mitte des Roboterkörpers zu verschwenken.

6. Transportroboter (10) nach einem voranstehenden Anspruch, **dadurch gekennzeichnet, dass** die Antriebseinrichtung (9) eine Mehrzahl an separaten Antriebseinheiten (32) umfasst, wobei jede Antriebseinheit (32) ein Rad (2), eine Fahrantriebseinheit zum Antrieb des Rads (2) und zweckmäßigerweise eine Hubantriebseinheit zum Verschwenken des Rads (2) um eine horizontale Achse umfasst.

7. Transportroboter nach Anspruch 6, **dadurch gekennzeichnet, dass** die Antriebseinrichtung zwei vordere Antriebseinheiten und zwei hintere Antriebseinheiten umfasst und der Abstand zwischen den zwei vorderen Antriebseinheiten geringer ist als der Abstand zwischen den zwei hinteren Antriebseinheiten.

8. Transportroboter nach Anspruch 6 oder 7, **dadurch gekennzeichnet, dass** jede Antriebseinheit um eine jeweilige horizontale Schwenkachse verschwenkbar ist, um einen Hub der Oberseite in z-Richtung zu bewirken, wobei jede horizontale Schwenkachse in vertikaler Richtung tiefer als eine Antriebsachse der jeweiligen Fahrantriebseinheit angeordnet ist und höher als eine Radachse des jeweiligen Rads angeordnet ist.

9. Transportroboter (10) nach einem voranstehenden Anspruch, **dadurch gekennzeichnet, dass** die Räder (2) omnidirektionale Räder, insbesondere Mecanum-Räder, umfassen.

10. Transportroboter (10) nach einem voranstehenden Anspruch, **dadurch gekennzeichnet, dass** die Stirnteile (5) gelaserte Stirnbleche sind.

11. Transportroboter (10) nach einem voranstehenden Anspruch, **dadurch gekennzeichnet, dass** die Tragestruktur (3) eine Rahmenstruktur (4) umfasst, die durch die Stirnteile (5) und die Seitenteile (6) gebildet wird.

12. Transportroboter (10) nach einem voranstehenden Anspruch, **dadurch gekennzeichnet, dass** die Tragestruktur (3) in x-Richtung verlaufende innere Seitenteile (8) umfasst, die einen inneren Bereich der Tragestruktur (3) in mehrere Kammern (12) unterteilen.

13. Transportroboter (10) nach einem voranstehenden Anspruch, **dadurch gekennzeichnet, dass** die Antriebseinrichtung (9) eine Steuereinrichtung umfasst, die eine GPS-Einheit, inertiale Messeinheit, Laser-Einheit, LIDAR-Einheit und/oder optische Lokalisationseinheit umfasst.

14. Verfahren zur Herstellung eines Transportroboters (10) nach einem der voranstehenden Ansprüche, umfassend die Schritte:
Bereitstellen (S2) der Antriebseinrichtung (9),
Bereitstellung (S1) von individuellen Maßen für eine x-Erstreckung und y-Erstreckung des Transportroboters (10),
Nach dem Bereitstellen der Antriebseinrichtung (9), Herstellen (S3) des Roboterkörpers (1) gemäß den bereitgestellten Maßen, wobei die Stirnteile (5) gemäß dem Maß für die y-Erstreckung hergestellt, insbesondere gelasert, werden und die Seitenteile (6) gemäß dem Maß für die x-Erstreckung hergestellt, insbesondere zugesägt werden, und
Montieren (S4) der Antriebseinrichtung an dem Roboterkörper (1) .

15. Anordnung (40), umfassend einen ersten Transportroboter (10A) und einen zweiten Transportroboter (10B), die jeweils gemäß einem der Ansprüche 1 bis 13 ausgebildet sind, **dadurch gekennzeichnet, dass** sich die beiden Transportroboter (10A, 10B) in der x-Erstreckung der Seitenteile und/oder der y-Erstreckung der Stirnteile unterscheiden und jeweils eine baugleiche Antriebseinrichtung (9) aufweisen.
